# EUROPEAN PATENT APPLICATION

(11) **EP 4 546 208 A1**
(43) Date of publication of application: **30.04.2025**
(21) Application number: 23205971.7
(22) Date of filing: 26.10.2023
(51) Int. Cl.: G06F 40/30, G06N 3/045

(54) **A COMPUTER-IMPLEMENTED METHOD FOR GENERATING A DATA DRIVEN MODEL FOR ANALYZING TIME SERIES OF MEASUREMENTS**

(71) Applicant: Siemens Aktiengesellschaft, 80333 München (DE)
(72) Inventor: Krompaß, Denis, 85591 Vaterstetten (DE); Depeweg, Stefan, 14052 Berlin (DE)
(74) Representative: Siemens Patent Attorneys

(57) **Abstract**

The invention refers to a computer-implemented method for generating a data driven model (DDM) for analyzing time series of measurements (TSM), wherein the method processes a plurality of time series data sets (TSD), each time series data set (TSD) comprising a time series of measurements (TSM) and textual meta data (MD) describing the time series of measurements (TSM). The method comprises the following steps:
i) generating for each time series of measurements (TSM) several phrases (PH) by processing the meta data (MD) describing the respective time series of measurements (TSM) by a Large Language Model (LLM), resulting in training data sets (TD), each training data set (TD) comprising a time series of measurements (TSM) and a phrase generated for the time series of measurements (TSM);
ii) training a time series encoder (TSEN) based on the training data sets (TD), the time series encoder (TSEN) being a neural network for generating in a representation space a semantic representation (RTS) of an input time series of measurements (ITSM) fed to the time series encoder (TSEN), where the time series encoder (TSEN) is coupled with a text encoder (TXEN), the text encoder (TXEN) being a pre-trained neural network for generating in the representation space a semantic representation (RTX) of an input phrase (IPH) fed to the text encoder (TXEN), where the trained time series encoder (TSEN) in combination with the text encoder (TXEN) is the generated data driven model (DDM).

## Description

The invention refers to a computer-implemented method for generating a data driven model for analyzing time series of measurements.

Foundation models are large machine learning models trained on a huge quantity of data. Examples of foundation models are Large Language Models such as ChatGPT from OpenAI. Large Language Models enable a user-friendly interaction with data, e.g. by using natural language, based on Artificial Intelligence. For textual data, Large Language Models allow to access and search a huge amount of data or even generate new content.

It is known to extend foundation models to other data than textual data. E.g., Visual ChatGPT from OpenAI processes visual information and solves certain tasks like visual question answering or image editing.

Another example of a foundation model is CLIP from OpenAI (CLIP = Contrastive Language-Image Pre-training) which is a neural network that efficiently learns visual concepts from natural language supervision. To do so, CLIP uses a text encoder in combination with an image encoder. The text encoder maps natural language data to a semantic representation space and the image encoder maps image data to the same semantic representation space as the text encoder. This enables question answering about visual content within images.

CLIP is basically trained by image data from the Internet where rich amounts of images and corresponding captions are available and can be easily collected. In a specific case, CLIP has been trained on 400 million of text/image pairs.

Up to now, it is not known to extent foundation models to time series of measurements. This is because time series data are usually not annotated by captions but only by single keywords and meta information, e.g. about the sensor device providing the measurements. In other words, the amount of training data for time series is limited so that a foundation model cannot be efficiently trained.

It is an object of the invention to generate a well-trained data driven model for analyzing time series of measurements.

This object is solved by the computer-implemented method according to claim 1. Preferred embodiments of the invention are defined in the dependent claims.

The computer-implemented method according to the invention generates a data driven model and particularly a foundation model for analyzing time series of measurements. To do so, the method processes a plurality of time series data sets, each time series data set comprising a time series of measurements and textual meta data describing the time series of measurements. Preferably, the textual meta data comprise a set of keywords.

In a step i) of the method according to the invention, several phrases are generated for each time series of measurements by processing the meta data describing the respective time series of measurements by a Large Language Model, resulting in training data sets, each training data set comprising a time series of measurements and a phrase generated for the time series of measurements. In other words, the number of training data sets is given by the number of generated phrases, where some training data sets refer to the same time series of measurements but to different phrases.

In a step ii) of the method according to the invention, a time series encoder is trained based on the training data sets, the time series encoder being a neural network for generating in a representation space a semantic representation of an input time series of measurements fed to the time series encoder, where the time series encoder is coupled with a text encoder which is a pre-trained neural network for generating in the representation space a semantic representation of an input phrase fed to the text encoder.

The trained time series encoder in combination with the pre-trained text encoder is the (trained) data driven model generated by the method according to the invention. This data driven model is configured to calculate one or more semantic similarity scores between two semantic representations in the representation space and to generate an output depending on the one or more calculated semantic similarity scores. In the case of several similarity scores, each similarity score refers to another pair of semantic representations. The output of the data driven model may be stored in a memory for further data processing and/or may be presented via a user interface. The output generated by the data driven model may comprise different information. Examples of outputs of the data driven model are described below in connection with preferred embodiments of the invention.

The invention is based on the finding that a Large Language Model can be used to efficiently generate phrases of training data for training a data driven model for analyzing time series of measurements. Any known Large Language Model can be used for generating the training data. In a preferred embodiment, the Large Language Model is based on ChatGPT from OpenAI, e.g. ChatGPT-4, or on Lhama 2 from Meta.

The time series encoder can be any known machine learning model for time series data (see e.g. https://timeseriesai. github.io/tsai/). In a preferred variant, the time series encoder is a Residual Neural Network or a Transformer Model.

In another preferred embodiment, the pre-trained text encoder is the text encoder of CLIP. Alternatively, the text encoder may be a pre-trained Large Language Model such as ChatGPT or Llama 2.

In a preferred variant of the invention, step i) is performed such that the meta data describing a respective time series of measurements are fed several times to the Large Language Model and/or a phrase generated by the Large Language Model for the textual meta data describing a respective time series of measurements is rephrased by the Large Language Model.

In another preferred embodiment of the invention, the trained data driven model is configured to calculate and output the semantic similarity score between the semantic representation of an input phrase fed to the text encoder and the semantic representation of an input time series of measurements fed to the trained time series encoder. This enables to recognize similarities between input phrases and input time series of measurements.

In another embodiment of the method according to the invention, the trained data driven model is configured to output, for a specific input time series of measurements fed to the trained time series encoder and a plurality of input phrases fed to the text encoder, the input phrase associated with the highest similarity score between the semantic representation of an input phrase out of the plurality of input phrases and the semantic representation of the specific input time series of measurements.

In another particularly preferred embodiment, the time series of measurements of several time series data sets (which may be at least partially different from the plurality of time series data sets) are fed to the time series encoder of the trained data driven model to obtain a semantic representation for each time series of measurements, thus generating a database of time series of measurements each associated with a semantic representation of the corresponding time series data set, where the trained data driven model is configured to calculate similarity scores between the semantic representation of an input time series of measurements or an input phrase and the sematic representation of respective time series of measurements out of the database. At least some of those similarity scores and/or references (e.g. corresponding names) to the respective time series of measurements out of the database may be output by the data driven model, i.e. stored in a corresponding memory for further processing and/or presented via a user interface. E.g., the output may refer to the time series of measurements out of the database having the highest similarity score with the input time series of measurements or the input phrase. This embodiment enables an extraction of time series of measurements out of a database which are similar to a corresponding input time series or a corresponding input phrase.

The time series of measurements processed by the method according to the invention may refer to different kinds of data. Preferably, the time series of measurements refer to measurements taken from one of more machines in a production plant and/or taken from one or more electric motors and/or taken from one or more turbines, particularly gas turbines, and/or taken from one or more humans or animals (e.g. activity data).

The textual meta data processed by the method according to the invention may refer to different kinds of data. Preferably, the textual meta data describe the technical domain of the measurements and/or one or more quantities being measured and/or one or more entities from with the measurements are taken and/or one or more events associated with the time series of measurements (e.g. a failure of the technical component from which the corresponding time series of measurements is taken).

Besides the above method, the invention refers to a computer program product with program code, which is stored on a machine-readable carrier, for carrying out a method according to the invention or according to one or more preferred embodiments of the invention when the program code is executed on a computer.

Furthermore, the invention refers to a computer program with program code for carrying out a method according to the invention or according to one or more preferred embodiments of the invention when the program code is executed on a computer.

In the following, embodiments of the invention will be described with respect to the accompanying drawings wherein:
- Fig. 1: is a flow chart showing the steps of a method according to an embodiment of the invention; and
- Fig. 2: is a schematic illustration of a data driven model generated by the method of Fig. 1.

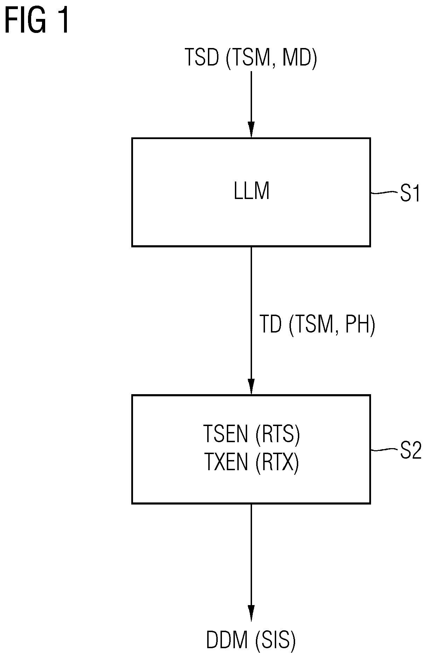

Fig. 1 shows a flow chart of a computer-implemented method for generating a data driven model based on an embodiment of the invention. The computer-implemented method processes a plurality of time series data sets designated as TSD in Fig. 1. Each time series data set comprises a time series of measurements TSM and textual meta data MD describing the time series of measurements.

The textual meta data MD of the respective time series data sets TSD may refer to different information described by keywords. The meta data may e.g. refer to:
- the quantity that is measured, e.g. temperature, acceleration, pressure;
- unit of the measurement, e.g. Degree Celsius, Pascal, m/s²;
- the context of the domain, e.g. manufacturing, power generation, human activity recognition;
- the actor (the thing that is measured, e.g. a human, gas turbine, phase measurement unit);
- peaks in the signals being measured;
- event data, like the event of a failure associated with the corresponding time series of measurements.

In step S1 of the method according to Fig. 1, the textual meta data MD are processed by a Large Language Model LLM. Any known Large Language Model may be used in step S1. In the embodiment described herein, ChatGPT is used as the Large Language Model. This Large Language Model generates for each time series data set TSD and thus for each time series of measurements TSM several phrases PH by processing the textual meta data MD describing the respective time series of measurements TSM. To do so, instructions for generating phrases from the textual meta data MD are automatically input to ChatGPT.

An example of textual meta data MD may refer to the description of a time series concerning measurements of an acceleration of a human walking on stairs for human activity recognition. Such meta data MD may be described by the following keywords: "measuring acceleration, human, walking stairs, human activity recognition".

Based on those meta data, the following instruction may be input to ChatGPT:
"Please phrase a sentence out of the following words: time series showing, by measuring acceleration, human, walking stairs, human activity recognition."

ChatGPT may e.g. generate the following phrase from the above instruction:
"The time series, obtained through acceleration measurements, demonstrates human activity recognition by capturing a person walking up the stairs."

In order to generate several phrases for those textual meta data, the same instruction for generating a phrase may be input to ChatGPT several times. ChatGPT will usually generate different phrases when repeating the same instruction. Alternatively, for the same textual meta data, rephrasing instructions for an already generated phrase may automatically be input to ChatGPT. Such a rephrasing instruction may be as follows:
"Please rephrase: "The time series, obtained through acceleration measurements, demonstrates human activity recognition by capturing a person walking up the stairs."

ChatGPT may e.g. generate the following phrase from this rephrasing instruction:
"By capturing a person walking up the stairs, the time series, derived from acceleration measurements, showcases human activity recognition."

The rephrasing can be repeated by inputting the rephrasing instruction "again please" to ChatGPT. This rephrasing instruction may result in the following phrase:
"The time series showcases human activity recognition by capturing a person walking up the stairs, using acceleration measurements."

As a consequence of step S1, a plurality of phrases PH is generated for the corresponding textual meta data MD of each time series data set TSD. Each phrase PH in combination with the time series of measurements TSM associated with the textual meta data MD from which the respective phrase PH is derived forms a training data set TD. Hence, a high number of training data sets can be generated in step S1 by several phrasing/rephrasing instructions based on corresponding textual meta data MD.

In step S2 of the embodiment of Fig. 1, the training data sets TD are used for training a time series encoder TSEN which is coupled with an already trained text encoder TXEN. In the embodiment described herein, the text encoder from CLIP is used.

The time series encoder TSEN is a neural network for generating in a representation space a semantic representation RTS of an input time series of measurements fed to the time series encoder. The text encoder TXEN is a pre-trained neural network for generating in the same representation space as the time series encoder TSEN a semantic representation RTX of an input phrase fed to the text encoder.

The training of the time series encoder TSEN in combination with the pre-trained text encoder TXEN is based on well-known techniques. Particularly, the same training technique as for CLIP may be used.

As a result of step S2, a trained data driven model DDM is obtained. The trained data driven model DDM is configured to calculate one or more semantic similarity scores SIS between two semantic representations in the representation space and to generate an output depending on the one or more calculated similarity scores. The similarity scores SIS represent the semantic similarity between two representations in the representation space. Particularly, a similarity score between a representation RTS of a time series of measurements and a representation RTX of a phrase can be derived by the data driven model DDM.

Summarized, in step S2, a time series encoder TSEN and a text encoder TXEN are trained jointly such that correct pairings of textual input and time series input are matched on the representational level in the same representation space. Hence, both encoders encode their respective modality (time series or phrases), and the encoding between modalities that contain the same content should match. For the time series encoder and the text encoder, known neural networks may be used, e.g. a Residual Neural Network or a Transformer Model.

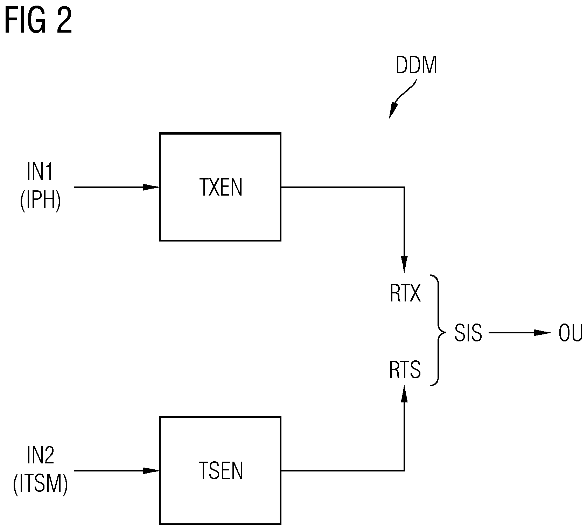

Fig. 2 shows the structure of the data driven model DDM generated based on the method of Fig. 1. The data driven model comprises the pre-trained text encoder TXEN as well the time series encoder TSEN trained in step S2 of Fig. 1. The text encoder TXEN has an input IN1. An arbitrary input phrase IPH referring to a textual description of a time series may be fed to the input IN1 of the text encoder TXEN. The time series encoder TSEN has an input IN2. An arbitrary input time series of measurements ITSM may be fed to the input IN2 of the time series encoder TSEN. The text encoder TXEN generates the semantic representation RTX for the input phrase IPH. The time series encoder TSEN generates the semantic representation RTS for the input time series of measurements ITSM.

In the embodiment described herein, the data driven model DDM calculates the similarity score SIS between the representations RTX und RTS. This similarity score expresses the similarity between the corresponding phrase IPH and the corresponding time series of measurements ITSM. The higher the similarity score, the greater the similarity between IPH and ITSM. The similarity score SIS is usually normalized, e.g. the score may assume values between 0 and 1 where the value 0 represents no similarity between the representations and the value 1 expresses a match between the representations. The data driven model DDM of Fig. 2 generates an output OU on a corresponding user interface where the output is the value of the similarity score SIS so that a user can see if the phrase IPH is a good description for the time series ITSM.

Since the encoders of the time series and the phrases are aligned, it can be expected that the time series encodings are semantically rich and can be used for a general comparison between time series samples. This property can be the basis for semantic search in time series data. To do so, in a preferred embodiment of the invention, the time series of measurements of several time series data sets which may be taken from the time series data sets TSD or which may be at least partially different from the time series data sets TSD are fed to the time series encoder TSEN of the trained data driven model DDM to obtain a semantic representation for each time series of measurements fed to the time series encoder TSEN. As a consequence, a database of time series of measurements is generated, where each time series of measurements is associated with a semantic representation generated by the time series encoder TSEN and the textual meta data MD describing the respective time series of measurements.

A semantic search can be initiated in the database by inputting a time series ITSM as input IN2 or a phrase IPH as input IN1. The data driven model DDM then calculates the similarity scores between the input IN1 or IN2 and the time series of measurements included in the database. As a result, an information (e.g. the corresponding meta data MD) about the database entry (i.e. the time series of measurements) with the highest similarity score may be output by the data driven model DDM.

The invention as described in the foregoing has several advantages. Particularly, a data driven model is generated for analyzing time series data being described by meta data. For obtaining the data driven model, a plurality of training data sets is generated by the use of a Large Language Model producing phrases from the meta data describing the corresponding time series. The generation of these training data sets is an important step because such training data sets are usually not available from public resources, like the Internet.

After having trained the data driven model with the training data sets, similarities between textual phrases input to the data driven model and corresponding time series of measurements input to the data driven model may be derived. Furthermore, by building a database, a phrase or a time series of measurements may be input in the data driven model in order to extract the time series of measurements from the database which are similar to the corresponding phrase or time series having been input.

Independent of the grammatical term usage, individuals with male, female or other gender identities are included within the term.

## Claims

1. A computer-implemented method for generating a data driven model (DDM) for analyzing time series of measurements (TSM), wherein the method processes a plurality of time series data sets (TSD), each time series data set (TSD) comprising a time series of measurements (TSM) and textual meta data (MD) describing the time series of measurements (TSM), the method comprising the following steps:
i) generating for each time series of measurements (TSM) several phrases (PH) by processing the meta data (MD) describing the respective time series of measurements (TSM) by a Large Language Model (LLM), resulting in training data sets (TD), each training data set (TD) comprising a time series of measurements (TSM) and a phrase generated for the time series of measurements (TSM);
ii) training a time series encoder (TSEN) based on the training data sets (TD), the time series encoder (TSEN) being a neural network for generating in a representation space a semantic representation (RTS) of an input time series of measurements (ITSM) fed to the time series encoder (TSEN), where the time series encoder (TSEN) is coupled with a text encoder (TXEN), the text encoder (TXEN) being a pre-trained neural network for generating in the representation space a semantic representation (RTX) of an input phrase (IPH) fed to the text encoder (TXEN), where the trained time series encoder (TSEN) in combination with the text encoder (TXEN) is the generated data driven model (DDM) which is configured to calculate one or more semantic similarity scores (SIS) between two semantic representations (RTX, RTS) in the representation space and to generate an output (OU) depending on the one or more calculated similarity scores (SIS).

2. The method according to claim 1, **characterized in that** the Large Language Model (LLM) is based on ChatGPT or Llama 2.

3. The method according to claim 1 or 2, **characterized in that** the time series encoder (TSEN) is a Residual Neural Network or a Transformer Model.

4. The method according to one of the preceding claims, **characterized in that** the text encoder (TXEN) is the text encoder of CLIP (Contrastive Language-Image Pre-training) or the text encoder (TXEN) is a Large Language Model.

5. The method according to one of the preceding claims, **characterized in that** in step i) the textual meta data (MD) describing a respective time series of measurements (TSM) are fed several times to the Large Language Model (LLM) and/or a phrase (PH) generated by the Large Language Model (LLM) for the textual meta data (MD) describing a respective time series of measurements (TSM) is rephrased by the Large Language Model (LLM).

6. The method according to one of the preceding claims, **characterized in that** the data driven model (DDM) is configured to calculate the semantic similarity score (SIS) between the semantic representation (RTX) of an input phrase (IPH) fed to the text encoder (TXEN) and the semantic representation (RTS) of an input time series of measurements (ITSM) fed to the trained time series encoder (TSEN).

7. The method according to one of the preceding claims, **characterized in that** the data driven model (DDM) is configured to output, for a specific input time series of measurements (ITSM) fed to the trained time series encoder (TSEN) and a plurality of input phrases (IPH) fed to the text encoder (TXEN), the input phrase (IPH) associated with the highest similarity score (SIS) between the semantic representation (RTX) of an input phrase (IPH) out of the plurality of input phrases (PH) and the semantic representation (RTS) of the specific input time series of measurements (ITSM).

8. The method according to one of the preceding claims, **characterized in that** the time series of measurements (TSM) of several time series data sets (TSD) are fed to the time series encoder (TSEN) of the data driven model (DDM) to obtain a semantic representation for each time series of measurements (TSM), thus generating a database of time series of measurements (TSM) each associated with a semantic representation (RTS) of the corresponding time series data set (TSD), where the data driven model (DDM) is configured to calculate similarity scores (SIS) between the semantic representation (RTS, RTX) of an input time series of measurements (ITSM) or an input phrase (IPH) and the sematic representation (RTS) of respective time series of measurements (TSM) out of the database.

9. The method according to one of the preceding claims, **characterized in that** the time series of measurements (TSM) refer to measurements taken from one of more machines in a production plant and/or taken from one or more electric motors and/or taken from one or more turbines, particularly gas turbines, and/or taken from one or more humans or animals.

10. The method according to one of the preceding claims, **characterized in that** the textual meta data (MD) describe the technical domain of the measurements and/or one or more quantities being measured and/or one or more entities from with the measurements are taken and/or one or more peaks in the measurements and/or one or more events associated with the time series of measurements.

11. A computer program product with program code, which is stored on a machine-readable carrier, for carrying out a method according to one of the preceding claims when the program code is executed on a computer.

12. A computer program with program code for carrying out a method according to one of claims 1 to 10 when the program code is executed on a computer.
